(19) **Europäisches Patentamt / European Patent Office / Office européen des brevets**

(11) **EP 2 735 167 B1**

(12) # FASCICULE DE BREVET EUROPEEN

(45) Date de publication et mention de la délivrance du brevet:
**19.09.2018 Bulletin 2018/38**

(21) Numéro de dépôt: **12735285.4**

(22) Date de dépôt: **11.07.2012**

(51) Int Cl.:
**H04N 21/647** (2011.01)       **H04N 21/2381** (2011.01)
**H04N 21/242** (2011.01)       **H04N 21/222** (2011.01)
**H04N 21/236** (2011.01)

(86) Numéro de dépôt international:
**PCT/EP2012/063569**

(87) Numéro de publication internationale:
**WO 2013/010872 (24.01.2013 Gazette 2013/04)**

(54) **SYSTÈME DE DIFFUSION DE PROGRAMMES VIDÉOS**

SYSTEM ZUM AUSSTRAHLEN VON VIDEOPROGRAMMEN

SYSTEM FOR BROADCASTING VIDEO PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2011 FR 1156572**

(43) Date de publication de la demande:
**28.05.2014 Bulletin 2014/22**

(73) Titulaire: **Enensys Technologies**
**35510 Cesson Sévigné (FR)**

(72) Inventeurs:
- **PICHOT, Bernard**
  **F-35000 Rennes (FR)**
- **ROUL, Laurent**
  **F-35000 Rennes (FR)**
- **POULAIN, Ludovic**
  **F-35000 Rennes (FR)**
- **PUTON, Matthieu**
  **F-35000 Rennes (FR)**

(74) Mandataire: **Cabinet Le Guen Maillet**
**3, impasse de la Vigie**
**CS 71840**
**35418 Saint-Malo Cedex (FR)**

(56) Documents cités:
- **Thomson: "NETPROCESSOR 9026", , 2 septembre 2010 (2010-09-02), pages 1-2, XP002686329, Extrait de l'Internet: URL:http://www.thomson-networks.com/sites/default/files/Products/CDT-3042D-3.pdf [extrait le 2012-10-31]**
- **Thomson: "NetProcessor 9026 Demux", , 13 mars 2009 (2009-03-13), pages 1-2, XP002686330, Extrait de l'Internet: URL:http://www.tbcintegration.com/pdf/CDT-3096D.pdf [extrait le 2012-10-31]**
- **"Digital Video Broadcasting (DVB); Modulator Interface (T2-MI) for a second generation digital terrestrial television broadcasting system (DVB-T2)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.2.1, 1 décembre 2010 (2010-12-01), XP014061858,**
- **IRINI S RELJIN ET AL: "DVB standards development", TELECOMMUNICATION IN MODERN SATELLITE, CABLE, AND BROADCASTING SERVICES, 2009. TELSIKS '09. 9TH INTERNATIONAL CONFERENCE ON, IEEE, PISCATAWAY, NJ, USA, 7 octobre 2009 (2009-10-07), pages 263-272, XP031573513, ISBN: 978-1-4244-4382-6**
- **Thomson: "EyeGate - DVB-T/DVB-H DE-CONCENTRATOR", , 4 juin 2008 (2008-06-04), pages 1-2, XP002684522, Extrait de l'Internet: URL:http://www.tbcintegration.com/pdf/CDT-3006D-2.pdf [extrait le 2012-10-03]**

**Description**

La présente invention concerne le domaine de la diffusion de programmes de télévision numérique et plus particulièrement un procédé de génération d'un flux conforme à la norme DVB (*Digital Video Broadcast* en anglais) qui soit décodable par un décodeur de première génération, typiquement conforme à DVB-S/C/T/, et qui permet également la génération déterministe d'un flux conforme à la norme de seconde génération DVB-T2.

Historiquement, l'ETSI (*European Télécommunications Standards Institute* en anglais) a proposé une première norme, DVB-S, pour la diffusion de programmes par satellite. Cette norme a été déclinée dans les normes DVB-C pour la diffusion par réseau câblé et DVB-T pour la diffusion terrestre. Nous appellerons ces normes, normes DVB de première génération.

Ces normes partagent un socle commun. Les programmes sont composés de flux audio et vidéo multiplexés auxquels sont ajoutées des informations de signalisation sous la forme de tables de signalisation connues sous le nom de tables SI/PSI (*Service Information / Program Specific Information* en anglais). Le flux multiplexé résultant est encapsulé dans une couche de transport conforme à la norme MPEG-2 TS (*Transport Stream* en anglais) pour la diffusion. Ces normes ont connu un succès certain et constituent une technologie de diffusion télévisuelle largement répandue.

Document "NetProcessor 9026 Demux", 13 mars 2009 (2009-03-13), pages 1-2 describes a DVT/DVB-H transport stream demultiplexer.

Aujourd'hui, une nouvelle génération de ces normes est développée. En particulier, la diffusion terrestre est normalisée sous la forme d'une norme DVB-T2. Cette nouvelle norme permet d'agréger au sein d'un même flux plusieurs tunnels couche physique appelés PLP (*Physical Layer Pipe* en anglais). Chacun de ces tunnels couche physique est constitué d'un multiplexe de programmes dans un flux de transport de type MPEG-2 TS (Moving Picture Experts Group 2 Transport Stream) disposant de ses propres paramètres de modulation. Ces tunnels sont rassemblés au sein d'un flux appelé flux T2-MI (Modulator Interface). Le flux T2-MI est lui-même encapsulé dans une nouvelle couche de type MPTS (Multiple Program Transport Stream). Le flux T2-MI comprend des paquets de données T2-MI tels que des paquets de synchronisation T2-MI timestamp, des paquets de signalisation dont le paquet nommé L1 courant qui donne des informations sur la structure du flux T2-MI et des paquets appelés trames bandes de base (*Baseband Frame* en anglais) contenant les données des flux MPEG-2 TS des différents tunnels. Les paquets T2-MI sont organisés en trame T2-MI, chaque trame contient un paquet T2-MI timestamp, un paquet T2-MI L1 courant et des paquets trames bandes de base.

Les flux T2-MI sont finement synchronisés à l'aide des paquets T2-MI timestamp de façon à permettre une diffusion au sein d'une plaque mono fréquence SFN (*Single Frequency Network* en anglais). Ces plaques sont constituées d'une pluralité d'émetteurs diffusant le même signal radio DVB-T2 sur la même fréquence. Ce mode de diffusion n'est possible que si les émetteurs sont finement synchronisés et que les signaux radio DVB-T2 émis sont identiques au bit près, sous peine de générer des interférences dans les zones couvertes par les émissions d'au moins deux émetteurs.

L'adoption de la norme de diffusion terrestre de seconde génération ne peut se faire par un basculement et doit cohabiter avec une diffusion en parallèle des mêmes programmes suivant les normes de première génération. Si l'on prend l'exemple d'un opérateur diffusant un bouquet de programmes par satellite selon la norme DVB-S et désirant adopter également une diffusion terrestre des mêmes programmes selon la norme DVB-T2, il est nécessaire aujourd'hui de diffuser au moins deux flux, un premier multiplexe MPEG-2 TS classique contenant les programmes à destination des foyers dotés d'un décodeur satellite classique selon la norme DVB-S et un second multiplexe comprenant des paquets T2-MI encapsulés dans une couche de type MPEG-2 TS à destination des divers émetteurs DVB-T2. L'on se retrouve avec une duplication des programmes alors même que la bande passante satellite est onéreuse. Ces surcoûts sont un frein au développement de la seconde génération de norme DVB-T2.

L'invention vise à résoudre les problèmes précédents par un procédé de génération d'un flux contenant un multiplexe conforme à une norme DVB de première génération. Ce flux contient également des paquets de synchronisation et des paquets de signalisation conformes à la norme DVB-T2. Les paquets de synchronisation et les paquets de signalisation conformes à la norme DVB-T2 sont compris dans des parties, dites sections privées, insérées dans le flux contenant un multiplexe conforme à la norme DVB de première génération, non décodées ou non traitées, par un décodeur conforme à la norme DVB de première génération. Les section privées sont comprises dans des paquets qui sont ajoutés dans le flux contenant le multiplexe conforme à la norme DVB de première génération ou sont comprises dans des paquets ayant un identificateur de programme non référencé dans une table d'association de programme accessible au décodeur conforme à la norme DVB de première génération.

Un équipement selon l'invention sera par contre à même de construire le flux T2-MI au niveau d'un émetteur DVB-T2 qui contient au moins un sous-ensemble des programmes diffusés. Cette construction du flux T2-MI est faite selon l'invention de manière déterministe et synchrone qui permet une diffusion terrestre SFN des flux ainsi construits au niveau de chaque émetteur DVB-T2. De même, l'invention permet de procéder à la régionalisation de flux. L'homme du métier comprendra que cette invention s'applique aussi dans le cadre d'une diffusion MFN (*Multiple Frequency Network* en anglais).

L'invention concerne un procédé de génération d'un flux, dit flux dérivé, à partir d'un flux, dit flux d'origine, ledit flux d'origine étant un flux de transport comprenant un multiplexe de programmes conforme à une norme DVB de première génération décodable par un décodeur conforme à la norme DVB, caractérisé en ce que le procédé comporte les étapes suivantes de:

- obtention d'un flux T2-MI conforme à une norme de seconde génération comprenant le multiplexe de programmes et au moins des paquets de synchronisation et des paquets de signalisation conformes à la norme de seconde génération,
- génération du flux dérivé en insérant dans le flux d'origine des informations représentatives des paquets de synchronisation et les paquets de signalisation, les informations représentatives étant insérées dans des parties du flux dérivé non décodées par le décodeur conforme à la norme DVB de première génération, les informations représentatives insérées étant insérées dans des paquets ayant un identificateur de programme non référencé dans une table d'association de programme accessible au décodeur conforme à la norme DVB de première génération et en ce que les paquets ayant un identificateur de programme non référencé remplacent des paquets de bourrage compris dans le flux d'origine.

L'invention concerne aussi un dispositif de génération d'un flux, dit flux dérivé, à partir d'un flux, dit flux d'origine, ledit flux d'origine étant un flux de transport comprenant un multiplexe de programmes conforme à une norme DVB de première génération décodable par un décodeur conforme à la norme DVB, caractérisé en ce que le dispositif comporte:

- des moyens d'obtention d'un flux T2-MI conforme à une norme de seconde génération comprenant le multiplexe de programmes et au moins des paquets de synchronisation et des paquets de signalisation conformes à la norme de seconde génération,
- des moyens de génération du flux dérivé en insérant dans le flux d'origine des informations représentatives des paquets de synchronisation et les paquets de signalisation, les informations représentatives étant insérées dans des parties du flux dérivé non décodées par le décodeur conforme à la norme DVB de première génération, les informations représentatives insérées étant insérées dans des paquets ayant un identificateur de programme non référencé dans une table d'association de programme accessible au décodeur conforme à la norme DVB de première génération et en ce que les paquets ayant un identificateur de programme non référencé remplacent des paquets de bourrage compris dans le flux d'origine.

Ainsi, il n'est pas nécessaire de diffuser au moins deux flux, un premier multiplexe MPEG-2 TS classique contenant les programmes à destination des foyers dotés d'un décodeur satellite classique selon la norme DVB-S de première génération et un second multiplexe comprenant des paquets T2-MI encapsulés dans une couche de type MPEG-2 TS à destination des divers émetteurs DVB-T2. La bande passante satellite est ainsi économisée.

Selon un mode particulier de réalisation de l'invention, les informations insérées sont insérées par ajout de paquets à une position déterminée dans le flux d'origine et en ce que le procédé comporte en outre les étapes de :

- insertion de valeurs de marqueurs temporels comprises dans le flux d'origine dans les parties du flux dérivé non décodées par le décodeur conforme à la norme DVB de première génération, les marqueurs temporels étant insérées dans des paquets ajoutés au flux d'origine,
- mise à jour dans le flux dérivé des valeurs des marqueurs temporels de manière à prendre en compte l'ajout des paquets.

Ainsi, toutes les informations nécessaires à une reconstruction d'un flux conforme à la norme de seconde génération sont comprises dans le flux dérivé.

Selon un mode particulier de réalisation de l'invention, on adapte le débit par insertion de paquets de bourrage dont l'identificateur de programme est différent du programme nul.

Ainsi, toutes les informations nécessaires à une reconstruction d'un flux conforme à la norme de seconde génération sont comprises dans le flux dérivé. En remplaçant des paquets de bourrage du flux d'origine par des paquets ayant un identificateur de programme non référencé dans une table d'association de programme accessible au décodeur conforme à la norme DVB de première génération, le décodeur conforme à la norme DVB de première génération n'est pas perturbé par les informations nécessaires à une reconstruction d'un flux conforme à la norme de seconde génération.

De plus, le nombre de paquets compris dans le flux dérivé étant identique au nombre de paquets compris dans le flux d'origine, il n'est pas nécessaire de modifier le marquage temporel du flux d'origine.

Selon un mode particulier de réalisation de l'invention, chaque paquet ayant un identificateur de programme non référencé comporte en outre une information identifiant la position d'un paquet du flux d'origine compris dans le flux dérivé.

Ainsi, la présente invention est adaptée aux systèmes dans lesquels la position des informations de synchronisation dans un flux est importante. Les paquets de bourrage n'ayant pas en général une position prédéfinie dans un flux, il est possible d'indiquer la position dans le flux à laquelle devrait se trouver les informations de synchronisation.

Selon un mode particulier de réalisation de l'invention, l'identificateur de programme non référencé dans la table d'association de programme accessible au décodeur conforme à la norme DVB de première génération est différent de la valeur 1FFF en hexadécimal.

L'invention concerne également un procédé de génération d'un flux conforme à une norme DVB de seconde génération à partir d'un flux dit dérivé, comprenant un multiplexe de programmes conforme à une norme DVB de première génération décodable par un décodeur conforme à la norme DVB et des informations représentatives au moins de paquets de synchronisation et de paquets de signalisation conformes à la norme de seconde génération, caractérisé en ce que le procédé comporte les étapes de:

- extraction des informations représentatives au moins de paquets de synchronisation et de paquets de signalisation conformes à la norme de seconde génération compris dans le flux dérivé,
- lecture de valeurs de marqueurs temporels comprises dans des parties du flux dérivé non décodées par le décodeur conforme à la norme DVB de première génération,
- mise à jour des valeurs de marqueurs temporels comprises dans des parties du flux dérivé décodables par le décodeur conforme à la norme DVB de première génération avec les valeurs lues,
- génération du flux conforme à la norme DVB de seconde génération à partir du flux dérivé, dont les valeurs de marqueurs ont été mises à jour et des informations représentatives au moins de paquets de synchronisation et des paquets de signalisation conformes à la norme de seconde génération.

L'invention concerne aussi un dispositif de génération d'un flux conforme à une norme DVB de seconde génération à partir d'un flux dit dérivé, comprenant un multiplexe de programmes conforme à une norme DVB de première génération décodable par un décodeur conforme à la norme DVB et des information représentatives au moins des paquets de synchronisation et des paquets de signalisation conformes à la norme de seconde génération, caractérisé en ce que le dispositif comporte :

- des moyens d'extraction des informations représentatives au moins de paquets de synchronisation et de paquets de signalisation conformes à la norme de seconde génération compris dans le flux dérivé,
- des moyens de lecture de valeurs de marqueurs temporels comprises dans des parties du flux dérivé non décodées par le décodeur conforme à la norme DVB de première génération,
- des moyens de mise à jour des valeurs de marqueurs temporels comprises dans des parties du flux dérivé décodables par le décodeur conforme à la norme DVB de première génération avec les valeurs lues,
- des moyens de génération du flux conforme à la norme DVB de seconde génération à partir du flux dérivé dont les valeurs de marqueurs ont été mises à jour, et des informations représentatives au moins de paquets de synchronisation et des paquets de signalisation conformes à la norme de seconde génération.

Ainsi, il n'est plus nécessaire de transférer par l'intermédiaire d'un satellite un second multiplexe comprenant des paquets T2-MI encapsulés dans une couche de type MPEG-2 TS à destination des divers émetteurs DVB-T2. Il est possible de générer le flux conforme à une norme DVB de seconde génération à partir d'un flux dérivé.

Selon un mode particulier de réalisation de l'invention, les parties du flux d'origine non décodées par le décodeur conforme à la norme DVB de première génération sont des paquets ayant un identificateur de programme non référencé dans une table d'association de programme accessible au décodeur conforme à la norme DVB de première génération.

Selon un mode particulier de réalisation de l'invention, au moins un paquet ayant un identificateur de programme non référencé comporte en outre une information identifiant la position d'un paquet compris dans le flux dérivé.

Ainsi, la présente invention est adaptée aux systèmes dans lesquels la position des informations de synchronisation dans un flux est importante. Les paquets de bourrage n'ayant pas en général une position prédéfinie dans un flux, il est possible d'indiquer la position dans le flux à laquelle devrait se trouver les informations de synchronisation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 illustre l'architecture d'un système de diffusion satellite selon la norme DVB-S ;
la Fig. 2 illustre l'architecture d'un système de diffusion terrestre selon la norme DVB-T2 ;
la Fig. 3 illustre l'architecture d'un exemple de réalisation d'un système de diffusion selon l'invention ;
la Fig. 4 représente un dispositif de génération d'un flux dérivé ;
la Fig. 5 représente un dispositif de génération d'un flux conforme à une norme DVB de seconde génération à partir d'un flux dit dérivé ;

la Fig. 6 illustre le procédé de génération du flux dérivé selon un premier exemple de réalisation de la présente invention ;

la Fig. 7 illustre le procédé de génération du flux dérivé selon un second exemple de réalisation de la présente invention ;

la Fig. 8 illustre le procédé de génération d'un flux conforme à une norme DVB de seconde génération à partir du flux dérivé selon le premier exemple de réalisation de la présente invention ;

la Fig. 9 illustre le procédé de génération d'un flux conforme à une norme DVB de seconde génération à partir du flux dérivé selon le second exemple de réalisation de la présente invention.

L'invention est décrite plus précisément dans le cadre d'un exemple de réalisation basé sur la norme de diffusion de première génération DVB-S, mais l'homme du métier comprend qu'elle peut s'appliquer à toute norme DVB de première génération dont, par exemple, DVB-C, DVB-T ou autre. En effets, ces normes de première génération sont proches et utilisent un format de flux identique.

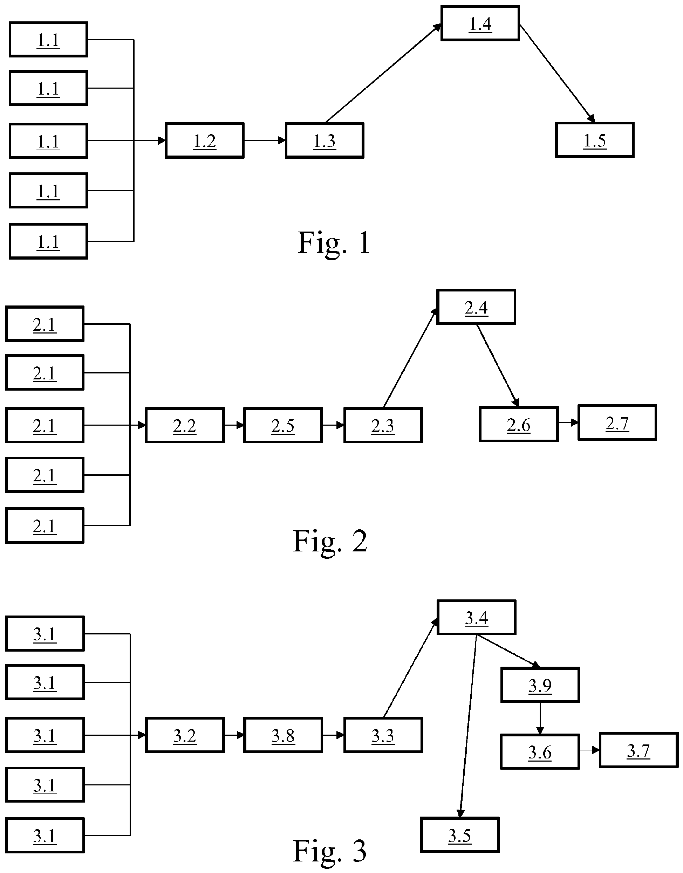

La Fig. 1 illustre l'architecture d'un système de diffusion satellite selon la norme DVB-S ou DVB-S2. En amont, un ensemble d'encodeurs audio/vidéo 1.1 réalise la compression des programmes. Ces programmes sont alors multiplexés par un multiplexeur 1.2 qui génère un multiplexe au format MPTS (*Multi-Program Transport Stream* en anglais) MPEG-2. Ce multiplexe est alors envoyé à un modulateur DVB-S ou DVB-S2 1.3. Le signal ainsi modulé est émis en direction d'un satellite 1.4 qui le diffuse vers un démodulateur DVB-S/S2 1.5 au domicile de l'usager.

La Fig. 2 illustre l'architecture d'un système de diffusion terrestre selon la norme DVB-T2. On retrouve certains éléments de l'architecture précédente. En particulier, on retrouve la pluralité d'encodeurs 2.1, le multiplexeur 2.2, un modulateur DVB-S/S2 2.3 pour émettre le signal vers le satellite 2.4. Par contre le format du flux émis est différent. En effet, le multiplexe construit par le multiplexeur 2.2 est envoyé à une passerelle T2 2.5 (*T2 gateway* en anglais) chargée d'encapsuler le multiplexe dans un flux T2-MI lui-même encapsulé dans un flux MPTS. Ce mécanisme est décrit dans le document « Digital Video Broadcasting (DVB); Modulator Interface (T2-MI) for a second generation digital terrestrial television broadcasting system (DVB-T2) » référencé « DVB Document A136r2 ». Le flux T2-MI encapsulé dans un flux MPTS est émis vers le satellite et diffusé vers les émetteurs DVB-T2. Ces émetteurs comportent un modulateur DVB-T2 2.6 pour une émission terrestre par l'émetteur 2.7.

Le flux T2-MI encapsulé dans un flux MPTS est diffusé par le satellite à un ensemble d'émetteurs 2.7 pour une émission sur une ou plusieurs régions et l'ensemble des modulateurs d'une même région ou plus précisément de la même plaque SFN transmet le signal modulé sur une même fréquence. Il est donc primordial que les différents modulateurs 2.6 de chaque émetteur 2.7 d'une même région soient finement synchronisés pour que l'émission SFN par les différents émetteurs 2.7 se passe sans problème. À cette fin, le flux T2-MI dispose d'informations spécifiques et particulièrement d'informations de synchronisation particulière, typiquement le paquet T2-MI appelé DVB-T2 timestamp, qui implémente un marquage temporel permettant cette synchronisation fine des modulateurs DVB-T2. Cette synchronisation repose sur le fait que des étiquettes temporelles, les paquets DVB-T2 timestamp, sont générés en un point unique dans la passerelle T2 2.5 en amont de la diffusion.

Un opérateur diffusant un bouquet de programmes selon la norme DVB-S/S2 de première génération et souhaitant adopter un mode de diffusion DVB-T2 se voit contraint de dupliquer l'émission vers le satellite de ses programmes. Une première émission est faite d'un flux DVB-S à destination des usagers. Une seconde émission est faite au format T2-MI encapsulé MPTS à destination des modulateurs DVB-T2. Ces deux flux sont incompatibles. En effet, un flux T2-MI ne peut être décodé par les décodeurs DVB-S/S2 déployés dans les foyers des usagers. À l'inverse, le flux DVB-S/S2 ne peut pas être utilisé par les modulateurs DVB-T2.

Une première idée de solution serait de déployer une passerelle T2 telle que la passerelle 2.5 en amont des modulateurs DVB-T2 2.6. On recevrait alors le flux DVB-S diffusé par le satellite pour les usagers et on utiliserait la passerelle T2 pour encapsuler ce flux au format T2-MI requis pas les modulateurs DVB-T2. Cette solution n'est pas fonctionnelle, car le processus de génération du flux T2-MI à partir d'un flux TS classique n'est pas déterministe. Les flux générés ne sont pas identiques au bit près et ne peuvent être synchronisés finement.

L'invention repose sur la génération du flux T2-MI en amont de la diffusion vers les émetteurs DVB-T2. Une fois le flux T2-MI généré, on insère dans le flux MPTS classique les paquets spécifiques T2-MI tels que les paquets de marquage temporel DVB-T2 timestamp et les paquets de signalisation L1 courant. Il est également nécessaire d'insérer un marquage temporel conforme au mécanisme ISCR (*Input Stream Clock Reference* en anglais) des paquets. Le champ ISCR transporte les valeurs d'un compteur de 22 bits cadencé à la fréquence de modulation, qu'un récepteur DVB T2 peut utiliser pour regénérer le débit exact du flux reçu. Le champ ISCR est l'un des champs du ISSY (*Input Stream SYnchronization* en anglais). Les paramètres compris dans les champs ISSY sont utilisés pour la génération de flux T2 MI avec plusieurs tunnels et lorsque la suppression de paquets nuls est activée. Les champs composant le ISSY et en particulier l'ISCR sont insérés dans l'en-tête des trames bandes de base. Plus précisément, l'heure d'arrivée de tous les paquets dans l'équipement générant le flux T2MI est marquée par ce compteur, et le champ ISCR est l'heure d'arrivée du premier paquet TS complet dans la trame bande de base.

Selon le premier exemple de réalisation de la présente invention, on insère dans le flux MPTS d'origine des parties, appelées sections privées, non décodées par le décodeur conforme à la norme DVB de première génération. Les sections privées comportent des informations représentatives de paquets T2-MI tels que les paquets de synchronisation DVB-T2 timestamp et les paquets de signalisation L1 courant. De nouveaux paquets comprenant les sections privées sont ajoutés au flux MPTS d'origine.

Les nouveaux paquets insérés dans le flux MPTS d'origine ont pour effet d'en modifier le débit. En conséquence, le marquage temporel des différents programmes ou mécanisme PCR (*Program Clock Reference* en anglais) n'est plus valide. On rappelle que ce mécanisme consiste à introduire de manière régulière une étiquette temporelle dans les paquets du programme pour permettre la synchronisation de sa diffusion. Selon le premier exemple de réalisation de la présente invention, un dernier traitement est donc nécessaire.

On récupère dans le flux MPTS d'origine les valeurs des marqueurs temporels PCR et on les insère dans des sections privées au sens du format MPTS. Les valeurs des marqueurs temporels PCR d'origines sont mises à jour dans les paquets pour s'adapter au nouveau débit du flux. De ce fait, le flux résultant, dit flux dérivé peut être diffusé directement aux usagers DVB-S/S2. En effet, les décodeurs DVB-S/S2 ignorent de telles sections privées et sont en mesure de décoder le flux résultant comme s'il s'agissait d'un flux MPTS classique.

Selon le second exemple de réalisation de la présente invention, on insère dans le flux MPTS d'origine des parties, appelées sections privées, non décodées par le décodeur conforme à la norme DVB de première génération. Les sections privées comportent des informations représentatives de paquets T2-MI tels que les paquets de synchronisation DVB-T2 timestamp et les paquets de signalisation L1 courant. Les paquets comprenant les sections privées remplacent des paquets de bourrage compris dans le flux MPTS d'origine.

Les paquets de bourrage sont aussi appelé paquet de programme nul. Ils ont par exemple un identifiant égal à 1FFF

Les différentes opérations effectuées selon le premier exemple de réalisation sur les marqueurs temporels PCR n'ont plus besoin d'être effectuées, le débit du flux MPTS n'étant pas modifié dans le second exemple de réalisation de la présente invention.

Le flux résultant, dit flux dérivé, peut être diffusé directement aux décodeurs DVB-S/S2 qui ignorent les paquets ayant un identificateur de programme non référencé dans la table d'association de programme.

Le flux dérivé est reçu par chaque émetteur DVB-T2 et permet à un équipement dédié de générer un flux T2-MI encapsulé MPTS. Ce processus de génération est déterministe et les informations temporelles de synchronisation étant celles générées en amont de la diffusion, elles sont identiques à tous les émetteurs DVB-T2 et il est possible de diffuser les flux ainsi reconstruits au niveau de chaque émetteur DVB-T2 selon un schéma d'émission SFN.

Nous appelons flux d'origine, le flux multiplexé encapsulé MPTS qui est généré par le multiplexeur 3.2. Nous appelons flux dérivé, le flux généré par la passerelle T2 DTH selon l'invention qui est dérivé du flux MPTS d'origine par insertion d'informations représentatives de paquets de synchronisation et de paquets de signalisation dans des parties du flux d'origine non décodées par le décodeur conforme à la norme DVB de première génération.

Le flux dérivé a le même format que le flux d'origine, mais contient en outre, des sections privées contenant des informations représentatives de paquets de synchronisation et des paquets de signalisation.

Les flux d'origine et dérivé sont donc conformes à la même norme DVB de première génération.

La Fig. 3 illustre l'architecture d'un exemple de réalisation d'un système de diffusion selon l'invention. On retrouve les éléments communs aux architectures déjà décrites, l'ensemble d'encodeurs 3.1 et le multiplexeur 3.2 pour générer le flux multiplexé MPTS dit d'origine en sortie du multiplexeur 3.2. Le flux MPTS d'origine est alors traité par une passerelle T2 modifiée 3.8 selon la présente invention que l'on appelle passerelle T2 DTH (*Direct To Home* en anglais). C'est cette passerelle T2 DTH qui est chargée de générer le flux MPTS dans lequel sont insérées les informations T2-MI selon l'invention. Cette génération est détaillée plus loin. Le flux MPTS dérivé est alors émis par un modulateur DVB-S/S2 vers le satellite 3.4 pour une diffusion. Cette diffusion est faite d'une part à destination d'usagers disposant d'une réception satellite classique 3.5, un décodeur conforme à la norme DVB de première génération. Ces usagers disposent d'un décodeur satellite classique qui peut décoder le flux reçu et n'accèdent pas aux paquets de synchronisation et aux paquets de signalisation.

Le bouquet diffusé est donc reçu par les utilisateurs satellites disposant d'un décodeur conforme à la norme DVB de première génération de manière transparente comme s'il s'agissait d'un flux MPTS classique conforme à l'architecture de la Fig. 1.

Le même flux MPTS dérivé est également diffusé vers des équipements 3.9 selon l'invention appelés générateurs T2 DTH (*DTH-T2 Edge* en anglais). Chaque générateur T2 DTH génère un flux conforme à une norme DVB de seconde génération à partir du flux dérivé reçu qui est transféré à un modulateur DVB-T2 classique 3.6. La sortie du modulateur DVB-T2 est reliée à un émetteur DVB-T2 3.7.

L'invention permet d'utiliser le même flux pour un décodage classique par des usagers et une émission en DVB-T2 par les émetteurs est située d'une part dans la passerelle T2 DTH 3.8 qui permet de générer le flux dérivé selon l'invention et dans le générateur T2 DTH 3.9 qui permet de construire le flux T2-MI à partir du flux dérivé. L'invention fonctionnerait de la même manière si la diffusion satellite était remplacée par une diffusion câblée, terrestre ou IP (*Internet Protocol* en anglais). Elle offre l'avantage qu'un même flux peut être utilisé par une diffusion DVB de première génération et par une diffusion DVB-T2.

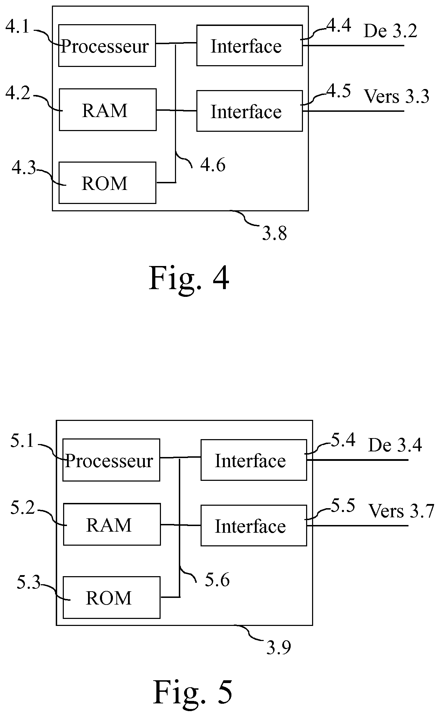

La Fig. 4 représente un dispositif de génération d'un flux dérivé.

Le dispositif de génération d'un flux dérivé ou passerelle T2 DTH 3.8 comporte un bus de communication 4.6 auquel sont reliés un processeur 4.1, une mémoire non volatile 4.3, une mémoire vive 4.2, une interface de communication 4.4 avec le multiplexeur 3.2 et une interface de communication avec le modulateur 3.3.

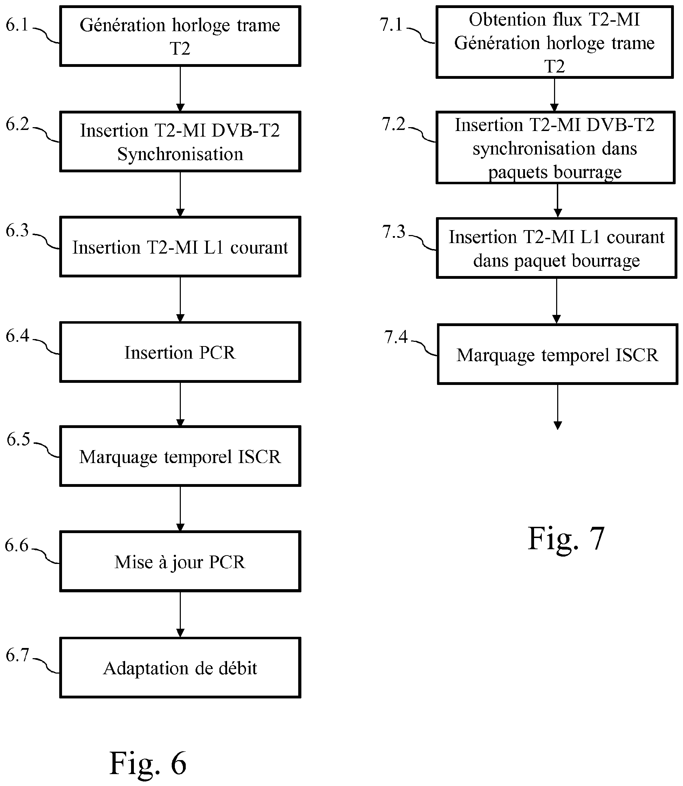

La mémoire non volatile 4.3 mémorise les modules logiciels mettant en oeuvre l'invention, ainsi que les données permettant de mettre en oeuvre les algorithmes qui seront décrits par la suite en référence aux Figs. 6 et/ou 7.

De manière plus générale, les programmes selon la présente invention sont mémorisés dans un moyen de stockage. Ce moyen de stockage est lisible par le microprocesseur 4.1.

Lors de la mise sous tension de la passerelle T2 DTH 3.8, les modules logiciels selon la présente invention sont transférés dans la mémoire vive 4.2 qui contient alors le code exécutable de l'invention ainsi que les données nécessaires à la mise en oeuvre de l'invention.

Par l'intermédiaire de l'interface 4.4, la passerelle T2 DTH 3.8 reçoit le flux d'origine du multiplexeur 3.2.

Par l'intermédiaire de l'interface 4.5, la passerelle T2 DTH 3.8 transfère le flux dérivé vers le modulateur 3.3.

Tout ou partie des étapes des algorithmes décrits par la suite en regard des Figs. 6 et/ou 7 peuvent être implémentées par logiciel en exécutant les étapes par un dispositif programmable tel qu'un microprocesseur, un DSP (*Digital Signal Processor*), ou un microcontrôleur ou implémenté dans un composant tel qu'un FPGA (*Field-Programmable Gale Array*) ou un ASIC (*Application-Specific Integrated Circuit*).

En d'autres mots, la passerelle T2 DTH 3.8 comporte de la circuiterie qui permet à la passerelle T2 DTH 3.8 d'exécuter les étapes de l'algorithme des Figs. 6 et/ou 7.

La Fig. 5 représente un dispositif de génération d'un flux conforme à une norme DVB de seconde génération à partir d'un flux dit dérivé.

Le dispositif de génération d'un flux conforme à une norme DVB de seconde génération ou générateur T2 DTH 3.9 comporte un bus de communication 5.6 auquel sont reliés un processeur 5.1, une mémoire non volatile 5.3, une mémoire vive 5.2. une interface de réception de signaux satellites 5.4 et une interface de communication avec le modulateur 3.6.

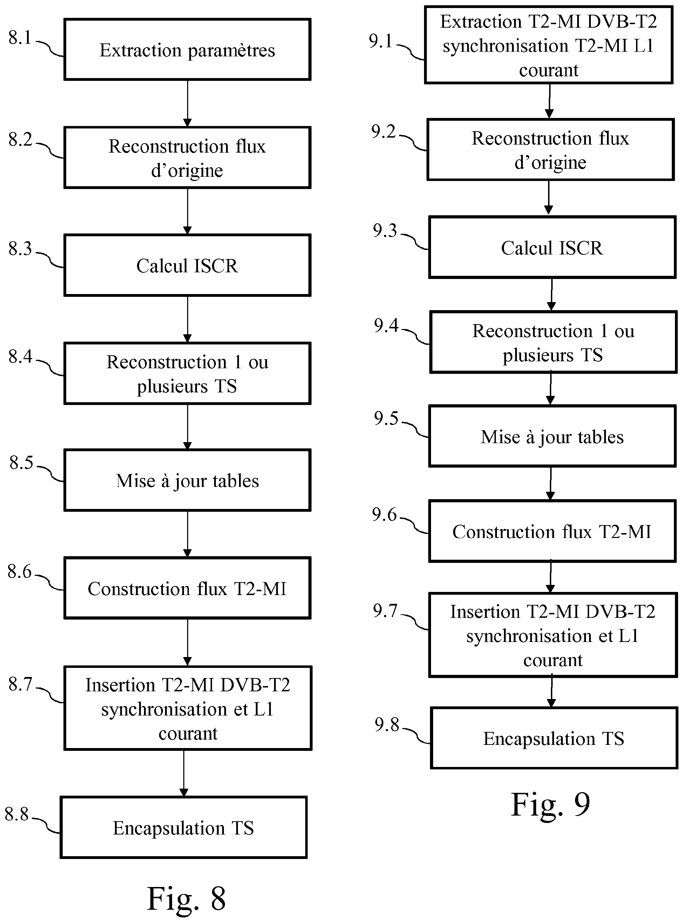

La mémoire non volatile 5.3 mémorise les modules logiciels mettant en oeuvre l'invention, ainsi que les données permettant de mettre en oeuvre des algorithmes qui seront décrits par la suite en référence aux Figs. 8 et/ou 9.

De manière plus générale, les programmes selon la présente invention sont mémorisés dans un moyen de stockage. Ce moyen de stockage est lisible par le microprocesseur 5.1.

Lors de la mise sous tension du générateur T2 DTH 3.9, les modules logiciels selon la présente invention sont transférés dans la mémoire vive 5.2 qui contient alors le code exécutable de l'invention ainsi que les données nécessaires à la mise en oeuvre de l'invention.

Par l'intermédiaire de l'interface 5.4, le générateur T2 DTH 3.9 reçoit le flux dérivé, modulé et diffusé par le satellite 3.4.

Par l'intermédiaire de l'interface 5.5, le générateur T2 DTH 3.9 transfère le flux conforme à une norme DVB de seconde génération vers le modulateur 3.6.

Tout ou partie des étapes des algorithmes décrits par la suite en regard des Figs. 8 et/ou 9 peuvent être implémentées par logiciel en exécutant les étapes par un dispositif programmable tel qu'un microprocesseur, un DSP (*Digital Signal Processor*), ou un microcontrôleur ou implémenté dans un composant tel qu'un FPGA (*Field-Programmable Gate Array*) ou un ASIC (*Application-Specific Integrated Circuit).*

En d'autres mots, la passerelle T2 DTH 3.8 comporte de la circuiterie qui permet au générateur T2 DTH 3.9 d'exécuter les étapes des algorithmes des Figs. 8 et/ou 9.

La Fig. 6 illustre le procédé de génération du flux dérivé selon un premier exemple de réalisation de la présente invention.

Ce procédé est implémenté par la passerelle T2 DTH 3.8. Certaines étapes du procédé sont identiques aux étapes effectuées par une passerelle T2 classique telle que la passerelle T2 2.5 de la Fig. 2. Cet équipement se situe au niveau de la tête de réseau. Il reçoit un flux MPTS d'origine provenant du multiplexeur 3.2. La passerelle T2 DTH 3.8 obtient un flux T2-MI conforme à une norme de seconde génération comprenant le multiplexe de programmes compris dans le flux MPTS d'origine et insère dans le flux MPTS d'origine au moins des paquets de synchronisation et des paquets de signalisation conformes à la norme de seconde génération.

La passerelle T2 DTH 3.8 génère un flux dérivé en insérant dans le flux d'origine les paquets de synchronisation et les paquets de signalisation dans des parties du flux d'origine non décodées par le décodeur conforme à la norme DVB de première génération.

Cette insertion est transparente pour un décodeur standard et conforme à la norme DVB de première génération.

Ce flux T2-MI peut contenir plusieurs tunnels couche physique au besoin. La passerelle T2 DTH 3.8 utilise une horloge temporelle de référence, par exemple le signal PPS à 10 MHz provenant d'un flux satellite, mais toute autre horloge partagée suffisamment précise peut convenir. Les paramètres d'entrée sont les paramètres de modulation du flux T2-MI, ce sont typiquement les mêmes paramètres que ceux utilisés dans une passerelle T2 classique.

La première étape 6.1 consiste à générer l'horloge de trame T2 ou en d'autres termes à obtenir un flux T2-MI conforme à une norme de seconde génération comprenant le multiplexe de programmes et au moins des paquets de synchronisation et des paquets de signalisation conformes à la norme de seconde génération. Cette horloge détermine la durée de la trame T2. À chaque coup de cette horloge, la passerelle T2 DTH insère dans le flux d'entrée les paquets T2-MI DVB-T2 timestamp, étape 6.2, et T2-MI L1 courant, étape 6.3. Ces paquets sont insérés ou encapsulés avantageusement dans une section privée (*private data* en anglais) conformément aux normes ETSI 300 468 et 13 818-1. La section privée est insérée dans le flux d'origine. Tout autre moyen pour insérer les paquets dans le flux d'une manière qui ne gêne pas le décodage par un décodeur standard peut être utilisé. La structure de la section privée peut être, par exemple, la suivante : un champ « Table_id » égal à 0x80, un champ « private_section_length » égal à la longueur totale du paquet T2-MI DVB-T2 timestamp en incluant le code correcteur et l'en-tête et un champ « private_data_byte » contenant l'intégralité du paquet T2-MI DVB-T2 timestamp.

Pour le paquet T2-MI L1 courant, la section privée contient par exemple les champs suivants: un champ « Table_id » égal à 0x81, un champ « private_section_length » égal à la longueur totale du paquet T2-MI L1 courant en incluant le code correcteur et l'en-tête et un champ « private_data_byte » contenant l'intégralité du paquet T2-MI L1 courant. C'est ce paquet qui contient la signalisation sur les programmes contenus dans le flux ainsi que les différents tunnels couche physique PLP contenus dans le flux T2-MI.

Lors de l'étape 6.4, on insère de la même manière dans le flux, plus précisément dans des sections privées que l'on insère dans le flux d'origine, un ou plusieurs paquets contenant l'ensemble des valeurs de PCR des paquets du flux d'origine. On appelle flux d'origine le flux multiplexé reçu en entrée de la passerelle T2 DTH. En effet, pour rester conforme avec la norme ETR 290, il est nécessaire de mettre à jour les valeurs de PCR contenues dans les paquets TS du flux d'entrée ou d'origine pour les adapter à la modification de débit due à l'insertion de toutes ces données supplémentaires dans le flux d'origine. Lorsque l'on veut retrouver ce flux d'entrée, on peut restaurer ces valeurs initiales des PCR à l'aide de ces paquets les contenant que l'on insère dans les sections privées insérées dans le flux d'origine. Pour chaque trame T2-MI, on insère l'ensemble des valeurs de PCR des paquets de la trame, c'est-à-dire l'ensemble des PCR des paquets entre deux coups d'horloge de l'horloge de trame T2.

Pour le paquet contenant les PCR, la section privée contient par exemple les champs suivants : un champ « Table_id » égal à 0x82, un champ « private_section_length » égal à la longueur totale du champ « private_data_byte » et un champ « private_data_byte » qui a la structure suivante :

```
Nb_services : 8 bits
Pour i de 1 à Nb_services
{
        Service_id : 16 bits
        Nb_PCR : 8 bits
        For j de 1 à Nb_PCR
         {
                reserved : 6 bits
                PCR : 42 bits
         }
}.
```

Lors de l'étape 6.5, avantageusement, l'ensemble des paquets TS en entrée de la passerelle T2 DTH est marqué temporellement en interne. Ce marquage est basé sur la fréquence du modulateur et est réalisé à l'aide d'un compteur sur 22 bits. Ce marquage est identique à celui fait par une passerelle T2 et correspond au mécanisme ISCR (*Input Stream Clock Reference* en anglais) tel que défini dans la norme ETSI 302 755 « Digital Video Broadcasting (DVB) ; Frame structure channel coding and modulation for a second generation digital terrestrial television broadcasting system (DVB-T2) ». La dernière valeur précédant l'insertion d'un paquet d'informations de reconstruction du flux T2-MI est sauvegardée et transmise dans un paquet TS. De même, il est possible d'ajouter dans ces paquets des informations sur la taille de la mémoire requise (*BUFS*) pour le décodage du flux reçu. Éventuellement, des informations privées peuvent être rajoutées. Ces informations privées pourront définir le contenu des flux TS en termes de programmes des différents tunnels.

Lors de l'étape 6.6, une mise à jour des PCR des paquets TS est effectuée. Afin de générer un flux conforme à la norme ETR 290, les PCR des différents services audio et vidéo sont mis à jour. Cette mise à jour est destinée à prendre en compte la différence de débit entre le flux dérivé et le flux d'origine.

Éventuellement, une adaptation de débit peut être effectuée lors d'une étape 6.7. Cette adaptation est alors faite par insertion de sections de bourrage. Normalement, les sections de bourrage sont caractérisées par un identificateur de programme PID non référencé dans une table d'association conforme à la norme DVB de première génération Ici, un identificateur différent est avantageusement choisi. Ceci permet de faire la différence entre des sections de bourrage présentes dans le flux d'origine et celles qui sont rajoutées éventuellement lors de cette étape. En effet, pour la validité des PCR lorsque l'on reconstitue le flux d'origine, il faut supprimer uniquement le bourrage additionnel ajouté lors de cette étape et pas le bourrage éventuellement présent dans le flux d'origine.

On a ainsi construit un flux dérivé du flux d'origine, agrémenté de sections privées contenant les informations relatives à ce même flux tel qu'il serait encapsulé au format T2-MI. Le flux contient les mêmes programmes multiplexés que le flux d'origine et reste parfaitement décodable par un décodeur satellite classique du fait de la mise à jour des PCR.

La Fig. 7 illustre le procédé de génération du flux dérivé selon un second exemple de réalisation de la présente invention.

Ce procédé est implémenté par la passerelle T2 DTH 3.8. La passerelle T2 DTH 3.8. Il reçoit un flux MPTS d'origine provenant du multiplexeur 3.2.

A l'étape 7.1, la passerelle T2 DTH 3.8 obtient un flux T2-MI conforme à une norme de seconde génération comprenant le multiplexe de programmes compris dans le flux MPTS d'origine. La passerelle T2 DTH 3.8 obtient un flux T2-MI conforme à une norme de seconde génération en générant à partir du flux d'origine un flux T2-MI ou reçoit un flux T2-MI comprenant au moins des paquets timestamp et des paquets L1. La passerelle T2 DTH 3.8 utilise les paquets timestamp et les paquets L1 du flux T2-MI reçu pour générer l'horloge de trame T2. Le flux T2-MI est lui-même encapsulé dans une nouvelle couche de type MPTS (Multiple Program Transport Stream). Le flux T2-MI comprend des paquets de données T2-MI tels que des paquets de synchronisation T2-MI timestamp, des paquets de signalisation dont le paquet nommé L1 courant qui donne des informations sur la structure du flux T2-MI et des paquets appelés trames bandes de base (*Baseband Frame* en anglais) contenant les données des flux MPEG-2 TS des différents tunnels. Les paquets T2-MI sont organisés en trame T2-MI, chaque trame contient un paquet T2-MI timestamp, un paquet T2-MI L1 courant et des paquets trames bandes de base.

La passerelle T2 DTH 3.8 génère une l'horloge de trame T2 à partir des paquets de synchronisation T2-MI timestamp. Cette horloge détermine la durée de la trame T2.

A l'étape suivante 7.2 la passerelle T2 DTH 3.8 identifie, pour chaque trame T2 le paquet du flux d'origine qui correspond au début d'une trame T2 et insère à la place d'un paquet de bourrage du flux d'origine, par exemple le premier paquet de bourrage suivant le paquet identifié, un paquet comprenant des informations représentatives d'un paquet T2-MI DVB-T2 timestamp ainsi qu'une information permettant la détermination de la position du paquet identifié dans le flux. Chaque paquet identifié correspond au début d'une trame T2.

A l'étape suivante 7.3 la passerelle T2 DTH 3.8 insère pour chaque coup d'horloge T2 à la place d'un paquet de bourrage du flux d'origine, par exemple le second paquet de bourrage suivant le paquet identifié, un paquet comprenant des informations représentatives du paquet T2-MI L1 courant.

Il est à remarquer ici qu'en variante, l'information permettant la détermination de la position du paquet identifié dans le flux correspondant à un début de trame T2, peut être aussi comprise dans le paquet comprenant des informations représentatives du paquet T2-MI L1 courant ou n'être comprise que dans le paquet comprenant des informations représentatives du paquet T2-MI L1 courant ou être comprise dans un autre paquet de bourrage du flux d'origine.

Les informations représentatives du paquet T2-MI DVB-T2 timestamp et du paquet T2-MI L1 courant sont insérées ou encapsulés avantageusement dans une section privée (*private data* en anglais) conformément aux normes ETSI 300 468 et 13 818-1.

Plus particulièrement, l'identificateur des paquets de bourrage est égal à 1FFF en hexadécimal, l'identificateur de trame des paquets de bourrage est remplacé par un identificateur de programme différent non référencé dans une table d'association de programme accessible au décodeur conforme à la norme DVB de première génération.

Les paquets remplaçant les paquets de bourrage sont des parties du flux d'origine non décodées par le décodeur conforme à la norme DVB.

A l'étape 7.4, la passerelle T2 DTH 3.8 marque temporellement l'ensemble des paquets MPTS en entrée de la passerelle T2 DTH. Ce marquage est basé sur la fréquence du modulateur et est réalisé à l'aide d'un compteur sur 22 bits. Ce marquage est identique à celui fait par une passerelle T2 et correspond au mécanisme ISCR (*Input Stream Clock Reference* en anglais) tel que défini dans la norme ETSI 302 755 « Digital Video Broadcasting (DVB) ; Frame structure channel coding and modulation for a second generation digital terrestrial television broadcasting system (DVB-T2) ». La dernière valeur précédant l'insertion d'un paquet d'informations de reconstruction du flux T2-MI est sauvegardée et transmise dans un paquet TS. De même, il est possible d'ajouter dans ces paquets des informations sur la taille de la mémoire requise (*BUFS*) pour le décodage du flux reçu. Éventuellement, des informations privées peuvent être rajoutées. Ces informations privées pourront définir le contenus des flux TS en termes de programmes des différents tunnels.

Les informations sur la taille de la mémoire requise sont par exemple insérées dans des paquets de bourrage dont l'identificateur est remplacé par un identificateur de programme différent non référencé dans une table d'association de programme accessible au décodeur conforme à la norme DVB de première génération.

La passerelle T2 DTH 3.8 a ainsi généré un flux dérivé.

Nous allons maintenant décrire un premier exemple de procédé permettant de reconstruire de manière déterministe le flux T2-MI à partir de ce même flux dérivé par un générateur T2 DTH. Ce procédé est illustré par la Fig. 8.

Le générateur T2 DTH est typiquement situé au niveau du site de transmission, c'est-à-dire au pied de l'émetteur DVB-T2. Il reçoit un flux TS, le flux dérivé du flux d'origine construit par la passerelle T2 DTH, et génère un flux T2-MI standard.

Lors d'une première étape 8.1, il est nécessaire d'extraire du flux les paramètres du flux T2-MI. Ces paramètres sont déduits des informations relatives à l'encapsulation T2-MI insérée dans le flux, typiquement il s'agit du contenu des paquets DVB-T2 timestamp et DVB-T2 L1 courant. Ces paquets sont donc extraits du flux et analysés pour obtenir ces paramètres. On récupère également à l'occasion l'index de la super trame et le compteur de paquet T2-MI. On sauvegarde également le premier compteur ISCR. Une super trame contient deux trames T2-MI. Le paquet T2 MI timestamp est identique pour chaque trame comprise dans la super trame.

Lors d'une seconde étape 8.2, on reconstruit le flux d'origine. Pour ce faire, on sauvegarde les paquets du flux dérivé sauf les sections privées ajoutées. On fait cette sauvegarde pour une trame, c'est-à-dire pour les paquets entre deux sections contenant les paquets T2-MI timestamp et T2-MI L1 courant. On restaure les PCR d'origine des paquets à partir des valeurs sauvegardées insérées dans le flux dérivé dans des sections privées. Le flux ainsi stocké est identique aux flux d'origine.

Lors de l'étape 8.3, on calcule la valeur du compteur ISCR de chaque paquet TS. Pour cela nous utilisons les valeurs insérées dans le flux lors de la génération du flux dérivé. Dans le flux dérivé nous avons une information ISCR par trame, il faut donc calculer une valeur d'ISCR pour chaque paquet à l'aide de cette valeur de trame. Pour cela, on prend deux valeurs successives du compteur ISCR, on en fait la différence que l'on divise par division entière par le nombre de paquets de la trame. Cette division nous donne un quotient et un reste. On incrémente alors la valeur du compteur ISCR du quotient pour chaque paquet TS entre le premier et le reste et du quotient plus un pour les autres paquets.

Lors de l'étape 8.4, on reconstruit un ou plusieurs flux à partir du flux d'origine. Ensuite, il faut construire les tunnels composant le flux à générer. Les programmes présents dans chacun des tunnels à générer sont indiqués dans les sections privées ou bien définis par l'utilisateur. Éventuellement, un seul tunnel est généré. Même dans ce cas, de manière générale, ce tunnel unique ne comprend qu'un sous-ensemble des programmes contenus dans le flux d'origine pour des questions de débit maximal DVB-T2 par rapport au DVB-S. Exceptionnellement, un tunnel unique pourra être constitué de l'intégralité des programmes du flux d'origine. Il s'agit donc de générer un ou plusieurs flux comprenant chacun un ensemble de programmes issus du flux d'origine et destinés à être encapsulés dans un tunnel couche physique au sein du flux T2-MI généré. Ces flux sont construits par duplication du flux d'origine. Ensuite pour chaque flux on met à nul les paquets des programmes non destinés à être présents dans le tunnel que l'on construit à partir de ce flux. Chaque flux créé contient donc uniquement les paquets relatifs aux programmes appartenant au tunnel et des paquets nuls. On comprend que cette faculté de construire les tunnels à partir d'un choix de programmes dans le flux d'origine permet également d'implémenter une régionalisation à partir de l'invention. Dans ce cas, chaque région constituée d'une ou plusieurs plaques SFN va choisir son propre bouquet au sein du flux d'origine. Le fait que le flux puisse être alors différent d'un point de génération à un autre ne casse pas la contrainte SFN étant donné que le même choix de programme est fait au sein d'une même plaque SFN qui appartient à une région donnée. Les disparités n'interviennent alors que d'une plaque SFN à une autre.

Lors d'une étape 8.5, on met à jour les tables de signalisation de chacun des flux pour refléter la suppression d'un certain nombre de programmes au sein du flux. Les tables devant être mises à jour sont notamment les tables PAT (*Program Association Table* en anglais), SDT (*Service Description Table* en anglais) et NIT (*Network Information Table* en anglais). De plus, les paquets EIT (*Event Information Table* en anglais) décrivant un service supprimé sont remplacés par un paquet EIT avec une section de bourrage afin de conserver les compteurs de continuité dans l'objectif de préserver le réseau SFN. Ainsi, les flux générés auront le même débit que le flux d'origine, le même nombre de paquets et les paquets TS auront la même valeur de compteur ISCR. Cette étape est optionnelle, elle n'est pas nécessaire par exemple si le flux T2-MI contient un seul tunnel contenant l'intégralité des programmes d'origine.

Lors d'une étape 8.6, on construit le flux T2-MI à partir du flux restauré et des informations relatives à l'encapsulation T2-MI extraites. Les flux TS sont encapsulés dans des paquets T2-MI. À l'aide du paquet T2-MI L1 courant, le nombre de tunnels ainsi que leurs paramètres de modulation sont connus. La taille et le nombre de trames bandes de base pour chacun des tunnels au sein d'une trame T2 en sont déduits. Les trames bandes de base sont construites dans le mode HEM (*High Efficiency Mode* en anglais) avec l'activation de la suppression des paquets nuls. Pour chacun des tunnels à traiter, les trames bandes de base sont remplies tant qu'il y a des paquets disponibles et les trames restantes sont remplies par du bourrage. Les trames bandes de base sont ensuite encapsulées dans des paquets T2-MI. Le compteur de paquets T2-MI ainsi que l'index de super trame T2 sont déduits du précédent paquet T2-MI L1 courant. De même, le champ ISCR de l'en-tête de la trame bande de base est mis à jour.

Lors d'une étape 8.7, les derniers paquets T2-MI DVB-T2 timestamp et L1 courant sont alors insérés à la suite.

Lors d'une dernière étape 8.8, le flux T2-MI ainsi généré est encapsulé, si nécessaire, dans un flux MPTS conformément à la norme DVB-T2.

La Fig. 9 illustre le procédé de génération d'un flux conforme à une norme DVB de seconde génération à partir du flux dérivé selon le second exemple de réalisation de la présente invention.

A l'étape 9.1, le générateur T2 DTH 3.9 extrait du flux reçu du satellite 3.4, les paquets de synchronisation T2-MI DVB-T2 timestamp et des paquets L1 courant insérés dans des paquets ayant un identificateur de programme non référencé dans une table d'association de programme accessible à un décodeur conforme à la norme DVB de première génération et extrait les informations identifiant chaque paquet correspondant à un début de trame T2 et en déduit des paramètres de modulation et des tunnels couche physique PLP. A cette même étape, le générateur T2 DTH 3.9 mémorise l'index de la super trame et le compteur de paquet T2-MI ainsi que la valeur du premier compteur ISCR du premier paquet de la trame T2. Une super trame contient au moins deux trames T2. Le paquet T2 MI timestamp est identique pour chaque trame T2 comprise dans la super trame.

A l'étape 9.2, le générateur T2 DTH 3.9 reconstruit le flux d'origine. Pour ce faire, le générateur T2 DTH 3.9 mémorise les paquets du flux dérivé à l'exception des paquets ayant un identificateur de programme non référencé dans une table d'association de programme accessible à un décodeur conforme à la norme DVB de première génération, remplace les identificateurs de programme non référencé dans une table d'association de programme accessible à un décodeur conforme à la norme DVB de première génération par l'identificateur correspondant à un paquet de bourrage et mémorise les paquets de bourrage ainsi rétablis.

A l'étape 9.3, le générateur T2 DTH 3.9 calcule la valeur du compteur ISCR de chaque paquet TS. Le générateur T2 DTH 3.9 utilise les valeurs insérées dans le flux lors de la génération du flux dérivé. Le flux dérivé comporte une valeur ISCR par trame, le générateur T2 DTH 3.9 calcule une valeur d'ISCR pour chaque paquet à l'aide de la valeur ISCR de la trame. Le générateur T2 DTH 3.9 prend deux valeurs successives du compteur ISCR, en fait la différence, la divise par le nombre N de paquets de la trame. Cette division donne un quotient ISCR_offset et un reste ISCR_rest.

La valeur de l'ISCR d'un paquet est calculée de la manière suivante :

Pour un paquet n compris entre 1 et N-ISCR_rest, ou 1 est le paquet identifié comme début de trame T2-MI :

$$\text{ISCR}(n) = \text{ISCR}(n\text{-}1) + \text{ISCR\_offset}$$

Pour un paquet n compris entre (N-ISCR_rest+1 et N
ISCR(n)=ISCR(n-1) + ISCR_offset+l.

A l'étape 9.4, le générateur T2 DTH 3.9 reconstruit un ou plusieurs flux à partir du flux d'origine aussi que les tunnels composant le flux conforme à la norme DVB de seconde génération. Les programmes présents dans chacun des tunnels à générer sont indiqués dans les sections privées ou bien définis par l'utilisateur. Éventuellement, un seul tunnel est généré. Ce tunnel unique comprend un sous-ensemble des programmes contenus dans le flux d'origine ou l'intégralité des programmes du flux d'origine. Le générateur T2 DTH 3.9 génère un ou plusieurs flux comprenant chacun un ensemble de programmes issus du flux d'origine et destinés à être encapsulés dans un tunnel couche physique au sein du flux T2-MI généré. Ces flux sont construits par duplication du flux d'origine. Ensuite pour chaque flux, le générateur T2 DTH 3.9 met à nul les paquets des programmes non destinés à être présents dans le tunnel reconstruit à partir du flux original. Chaque flux créé contient uniquement les paquets relatifs aux programmes appartenant au tunnel et des paquets nuls. On comprend que grâce à la faculté de construire les tunnels à partir d'un choix de programmes dans le flux d'origine, la présente invention permet également d'implémenter une régionalisation à partir de l'invention, c'est-à-dire des programmes locaux dans au moins un tunnel. Un programme local est un programme non compris dans le flux d'origine. Le fait que le flux généré puisse être alors différent d'un point de génération à un autre ne viole pas la contrainte SFN étant donné que le même choix de programme est fait au sein d'une même plaque SFN qui appartient à une région donnée.

A l'étape 9.5, le générateur T2 DTH 3.9 met à jour les tables de signalisation de chacun des flux pour refléter la suppression d'un certain nombre de programmes au sein du flux. Les tables devant être mises à jour sont notamment les tables d'association de programme PAT (*Program Association Table* en anglais), SDT (*Service Description Table* en anglais) et NIT (*Network Information Table* en anglais). De plus, les paquets EIT (*Event Information Table* en anglais) décrivant un service supprimé sont remplacés par un paquet EIT avec une section de bourrage afin de préserver la continuité des compteurs. Ainsi, les flux générés auront le même débit que le flux d'origine, le même nombre de paquets et les paquets MPTS auront la même valeur de compteur ISCR. Il est à remarquer ici que cette étape est optionnelle, elle n'est pas nécessaire par exemple si le flux T2-MI contient un seul tunnel contenant l'intégralité des programmes d'origine.

A l'étape 9.6, le générateur T2 DTH 3.9 construit le flux T2-MI à partir du flux reconstruit, des informations représentatives paquets de synchronisation T2-MI DVB-T2 timestamp et des paquets L1 courant compris dans les paquets ayant un identificateur de programme non référencé dans une table d'association de programme accessible à un décodeur conforme à la norme DVB de première génération.

Les flux MPTS sont encapsulés dans des paquets T2-MI. À l'aide du paquet T2-MI L1 courant, le nombre de tunnels ainsi que leurs paramètres de modulation sont connus. La taille et le nombre de trames bandes de base pour chacun des tunnels au sein d'une trame T2 sont déduits du paquet T2-MI L1 courant. Les trames bandes de base sont construites dans le mode HEM (*High Efficiency Mode* en anglais) avec l'activation de la suppression des paquets nuls. Pour chacun des tunnels à générer, les trames bandes de base sont remplies tant qu'il y a des paquets disponibles et les trames restantes sont remplies par du bourrage. Les trames bandes de base sont ensuite encapsulées dans des paquets T2-MI. Le compteur de paquets T2-MI ainsi que l'index de super trame T2 sont déduits du précédent paquet T2-MI L1 courant. De même, le champ ISCR de l'en-tête de la trame bande de base est mis à jour.

A l'étape 9.6, le générateur T2 DTH 3.9, les derniers paquets T2-MI DVB-T2 timestamp et L1 courant sont alors insérés à la suite.

A l'étape 9.6, le générateur T2 DTH 3.9, le flux T2-MI ainsi généré sont encapsulés, si nécessaire, dans un flux MPTS conformément à la norme DVB-T2.

On constate que ce procédé de génération du flux T2-MI à partir du flux dérivé est déterministe et peut donc être reproduit au niveau de chaque émetteur d'une zone de diffusion SFN sans compromettre les contraintes de synchronisation de la diffusion SFN. Grâce à l'invention, il est possible de ne diffuser qu'un seul et même flux qui peut être décodé directement par des décodeurs de première génération chez l'utilisateur et servir à une diffusion DVB-T2 même en mode SFN. Cette diffusion unique d'un seul flux est particulièrement intéressante dans le cas d'une diffusion par satellite, mode de diffusion où la bande passante est onéreuse.

**Revendications**

1. Procédé de génération d'un flux, dit flux dérivé, à partir d'un flux, dit flux d'origine, ledit flux d'origine étant un flux de transport comprenant un multiplexe de programmes conforme à une norme DVB de première génération décodable par un décodeur conforme à la norme DVB, **caractérisé en ce que** le procédé comporte les étapes suivantes de:

   - obtention d'un flux T2-MI conforme à une norme DVB de seconde génération comprenant le multiplexe de programmes et au moins des paquets de synchronisation et des paquets de signalisation conformes à la norme de seconde génération,
   - génération du flux dérivé en insérant dans le flux d'origine des informations représentatives des paquets de synchronisation et des paquets de signalisation, les informations représentatives étant insérées dans des parties du flux dérivé non décodées par le décodeur conforme à la norme DVB de première génération, les informations représentatives insérées étant insérées dans des paquets ayant un identificateur de programme non référencé dans une table d'association de programme accessible au décodeur conforme à la norme DVB de première génération et **en ce que** les paquets ayant un identificateur de programme non référencé remplacent des paquets de bourrage compris dans le flux d'origine.

2. Procédé selon la revendication 1, **caractérisé en ce que** au moins un paquet ayant un identificateur de programme non référencé comporte en outre une information identifiant la position d'un paquet du flux d'origine compris dans le flux dérivé.

3. Procédé selon la revendication 2, **caractérisé en ce que** l'identificateur de programme non référencé dans la table d'association de programme accessible au décodeur conforme à la norme DVB de première génération est différent de la valeur 1FFF en hexadécimal.

4. Procédé de génération d'un flux conforme à une norme DVB de seconde génération à partir d'un flux dit dérivé, comprenant un multiplexe de programmes conforme à une norme DVB de première génération décodable par un décodeur conforme à la norme DVB et des informations représentatives au moins de paquets de synchronisation et de paquets de signalisation conformes à la norme de seconde génération, **caractérisé en ce que** le procédé comporte les étapes de:

- extraction des informations représentatives au moins de paquets de synchronisation et de paquets de signalisation conformes à la norme de seconde génération compris dans le flux dérivé,
- lecture de valeurs de marqueurs temporels comprises dans des parties du flux dérivé non décodées par le décodeur conforme à la norme DVB de première génération,
- mise à jour des valeurs de marqueurs temporels comprises dans des parties du flux dérivé décodables par le décodeur conforme à la norme DVB de première génération avec les valeurs lues,
- génération du flux conforme à la norme DVB de seconde génération à partir du flux dérivé dont les valeurs de marqueurs ont été mises à jour et des informations représentatives au moins de paquets de synchronisation et des paquets de signalisation conformes à la norme de seconde génération

5. Procédé selon la revendication 4, **caractérisé en ce que** les parties du flux d'origine non décodées par le décodeur conforme à la norme DVB de première génération sont des paquets ayant un identificateur de programme non référencé dans une table d'association de programme accessible au décodeur conforme à la norme DVB de première génération.

6. Procédé selon la revendication 5, **caractérisé en ce que** chaque paquet ayant un identificateur de programme non référencé comporte en outre une information identifiant la position d'un paquet compris dans le flux dérivé.

7. Dispositif de génération d'un flux, dit flux dérivé, à partir d'un flux, dit flux d'origine, ledit flux d'origine étant un flux de transport comprenant un multiplexe de programmes conforme à une norme DVB de première génération décodable par un décodeur conforme à la norme DVB, **caractérisé en ce que** le dispositif comporte:

   - des moyens d'obtention d'un flux T2-MI conforme à une norme de seconde génération comprenant le multiplexe de programmes et au moins des paquets de synchronisation et des paquets de signalisation conformes à la norme de seconde génération,
   - des moyens de génération du flux dérivé en insérant dans le flux d'origine des informations représentatives des paquets de synchronisation et des paquets de signalisation, les informations représentatives étant insérées dans des parties du flux dérivé non décodées par le décodeur conforme à la norme DVB de première génération, les informations représentatives insérées étant insérées dans des paquets ayant un identificateur de programme non référencé dans une table d'association de programme accessible au décodeur conforme à la norme DVB de première génération et **en ce que** les paquets ayant un identificateur de programme non référencé remplacent des paquets de bourrage compris dans le flux d'origine.

8. Dispositif de génération d'un flux conforme à une norme DVB de seconde génération à partir d'un flux dit dérivé, comprenant un multiplexe de programmes conforme à une norme DVB de première génération décodable par un décodeur conforme à la norme DVB et des informations représentatives au moins des paquets de synchronisation et des paquets de signalisation conformes à la norme de seconde génération, **caractérisé en ce que** le dispositif comporte :

   - des moyens d'extraction des informations représentatives au moins de paquets de synchronisation et de paquets de signalisation conformes à la norme de seconde génération compris dans le flux dérivé,
   - des moyens de lecture de valeurs de marqueurs temporels comprises dans des parties du flux dérivé non décodées par le décodeur conforme à la norme DVB de première génération,
   - des moyens de mise à jour des valeurs de marqueurs temporels comprises dans des parties du flux dérivé décodables par le décodeur conforme à la norme DVB de première génération avec les valeurs lues,
   - des moyens de génération du flux conforme à la norme DVB de seconde génération à partir du flux dérivé dont les valeurs de marqueurs ont été mises à jour, et des informations représentatives au moins de paquets de synchronisation et des paquets de signalisation conformes à la norme de seconde génération.

**Patentansprüche**

1. Verfahren zum Erzeugen eines Stroms, der abgezweigter Strom genannt wird, aus einem Strom, der Ursprungsstrom genannt wird, wobei der Ursprungsstrom ein Transportstrom ist, der mehrere Programme in Übereinstimmung mit einer DVB-Norm der ersten Generation, die durch einen Decodierer der DVB-Norm decodiert werden können, enthält, **dadurch gekennzeichnet, dass** das Verfahren die folgenden Schritte umfasst:

   - Erhalten eines Stroms T2-MI gemäß einer DVB-Norm der zweiten Generation, der mehrere Programme und wenigstens Synchronisationspakete und Signalgebungspakete gemäß der Norm der zweiten Generation enthält,

- Erzeugen eines abgezweigten Stroms durch Einfügen von Informationen, die Synchronisationspakete und Signalgebungspakete repräsentieren, in den Ursprungsstrom, wobei die repräsentativen Informationen in Teile des abgezweigten Stroms eingefügt werden, die nicht von dem Decodierer gemäß der DVB-Norm der ersten decodiert worden sind, wobei die eingefügten repräsentativen Informationen in Pakete eingefügt werden, die eine Programmkennung besitzen, auf die in einer Programmzuordnungstabelle, auf die der Decodierer der DVB-Norm der ersten Generation zugreifen kann, Bezug genommen wird, und dass die Pakete, die eine Programmkennung ohne Bezugnahme besitzen, Staupakete, die in dem Ursprungsstrom enthalten sind, ersetzen.

2. Verfahren nach Anspruch 1, **dadurch gekennzeichnet, dass** wenigstens ein Paket, das eine Programmkennung ohne Bezugnahme besitzt, außerdem Informationen enthält, die die Position eines Pakets des Ursprungsstroms, das in dem abgezweigten Strom enthalten ist, identifizieren.

3. Verfahren nach Anspruch 2, **dadurch gekennzeichnet, dass** die Kennung des Programms ohne Bezugnahme in der Programmzuordnungstabelle, auf die der Decodierer gemäß der DVB-Norm der ersten Generation zugreifen kann, von dem Hexadezimalwert IFFF verschieden ist.

4. Verfahren zum Erzeugen eines Stroms gemäß einer DVB-Norm der zweiten Generation aus einem sogenannten abgezweigten Strom, der mehrere Programme gemäß einer DVB-Norm der ersten Generation, die durch einen Decodierer der DVB-Norm decodiert werden können, und Informationen, die wenigstens Synchronisationspakete und Signalgebungspakete gemäß der Norm der zweiten Generation repräsentieren, enthält, **dadurch gekennzeichnet, dass** das Verfahren die folgenden Schritte umfasst:

- Extrahieren von Informationen, die wenigstens Synchronisationspakete und Signalgebungspakete gemäß der Norm der zweiten Generation repräsentieren und in dem abgezweigten Strom enthalten sind,
- Lesen von Zeitmarkierungswerten, die in den Teilen des abgezweigten Stroms enthalten sind, die nicht von dem Decodierer gemäß der DVB-Norm der ersten Generation decodiert worden sind,
- Aktualisieren der Zeitmarkierungswerte, die in den Teilen des abgezweigten Stroms enthalten sind, die durch den Decodierer gemäß der DVB-Norm der ersten Generation decodiert werden können, mit den gelesenen Werten,
- Erzeugung des Stroms gemäß der DVB-Norm der zweiten Generation aus dem abgezweigten Strom, dessen Markierungswerte aktualisiert worden sind, und aus Informationen, die wenigstens Synchronisationspakete und Signalgebungspakete gemäß der Norm der zweiten Generation repräsentieren.

5. Verfahren nach Anspruch 4, **dadurch gekennzeichnet, dass** die Teile des Ursprungsstroms, die nicht durch den Decodierer gemäß der DVB-Norm der ersten Generation decodiert werden, Pakete sind, die eine Programmkennung besitzen, auf die in einer Programmzuordnungstabelle, auf die von dem Decodierer gemäß der DVB-Norm der ersten Generation zugegriffen werden kann, nicht Bezug genommen wird.

6. Verfahren nach Anspruch 5, **dadurch gekennzeichnet, dass** jedes Paket, das eine Programmkennung ohne Bezugnahme besitzt, außerdem Informationen enthält, die die Position eines Pakets, das in dem abgezweigten Strom enthalten ist, identifizieren.

7. Vorrichtung zum Erzeugen eines Stroms, der abgezweigter Strom genannt wird, aus einem Strom, der Ursprungsstrom genannt wird, wobei der Ursprungsstrom ein Transportstrom ist, der mehrere Programme gemäß einer DVB-Norm der ersten Generation enthält, die durch einen Decodierer gemäß der DVB-Norm decodiert werden können, **dadurch gekennzeichnet, dass** die Vorrichtung Folgendes umfasst:

- Mittel zum Erhalten eines Stroms T2-MI gemäß einer Norm der zweiten Generation, der die mehreren Programme und wenigstens Synchronisationspakete und Signalgebungspakete gemäß der Norm der zweiten Generation enthält,
- Mittel zum Erzeugen eines abgezweigten Stroms durch Einfügen von Informationen, die Synchronisationspakete und Signalgebungspakete repräsentieren, in den Ursprungsstrom, wobei die repräsentativen Informationen in Teile des abgezweigten Stroms eingefügt werden, die nicht durch den Decodierer gemäß der DVB-Nahrung der ersten Generation decodiert worden sind, wobei die eingefügten repräsentativen Informationen in Pakete eingefügt werden, die eine Programmkennung besitzen, auf die in einer Programmzuordnungstabelle, auf die der Decodierer gemäß der DVB-Norm der ersten Generation zugreifen kann, nicht Bezug genommen wird, und dass die Pakete, die eine Programmkennung ohne Bezugnahme besitzen, Staupakete, die in dem Ursprungsstrom enthalten sind, ersetzen.

8. Vorrichtung zum Erzeugen eines Stroms gemäß einer DVB-Norm der zweiten Generation aus einem abgezweigten Strom, der mehrere Programme gemäß einer DVB-Norm der ersten Generation enthält, die durch einen Decodierer gemäß der DVB-Norm decodiert werden können, und aus Informationen, die wenigstens Synchronisationspakete und Signalgebungspakete gemäß der Norm der zweiten Generation repräsentieren, **dadurch gekennzeichnet, dass** die Vorrichtung Folgendes umfasst:

- Mittel zum Extrahieren von Informationen, die wenigstens Synchronisationspakete und Signalgebungspakete gemäß der Norm der zweiten Generation, die in dem abgezweigten Strom enthalten sind, repräsentieren,
- Mittel zum Lesen von Zeitmarkierungswerten, die in den Teilen des abgezweigten Stroms enthalten sind, die nicht durch den Decodierer gemäß der DVB-Norm der ersten Generation decodiert worden sind,
- Mittel zum Aktualisieren der Zeitmarkierungswerte, die in den Teilen des abgezweigten Stroms enthalten sind, die durch den Decodierer gemäß der DVB-Norm der ersten Generation decodiert werden können, mit den gelesenen Werten,
- Mittel zum Erzeugen des Stroms gemäß der DVB-Norm der zweiten Generation aus dem abgezweigten Strom, dessen Markierungswerte aktualisiert worden sind, und aus Informationen, die wenigstens Synchronisationspakete und Signalgebungspakete gemäß der Norm der zweiten Generation repräsentieren.

**Claims**

1. Method for generating a stream, termed derived stream, on the basis of a stream, termed original stream, the said original stream being a transport stream comprising a multiplex of programs compliant with a first-generation DVB standard decodable by a decoder compliant with the DVB standard, **characterized in that** the method comprises the following steps of:

- obtaining a stream T2-MI compliant with a second-generation DVB standard comprising the multiplex of programs and at least synchronization packets and signalling packets compliant with the second-generation standard,
- generating the derived stream by inserting into the original stream information representative of the synchronization packets and signalling packets, the representative information being inserted into parts of the derived stream that are not decoded by the decoder compliant with the first-generation DVB standard, the inserted representative information being inserted into packets having a program identifier unreferenced in a program association table accessible to the decoder compliant with the first-generation DVB standard and **in that** the packets having an unreferenced program identifier replace padding packets included in the original stream.

2. Method according to Claim 1, **characterized in that** at least one packet having an unreferenced program identifier furthermore comprises an item of information identifying the position of a packet of the original stream included in the derived stream.

3. Method according to Claim 2, **characterized in that** the program identifier unreferenced in the program association table accessible to the decoder compliant with the first-generation DVB standard is different from the value 1FFF in hexadecimal.

4. Method for generating a stream compliant with a second-generation DVB standard on the basis of a so-termed derived stream, comprising a multiplex of programs compliant with a first-generation DVB standard decodable by a decoder compliant with the DVB standard and information representative at least of synchronization packets and of signalling packets compliant with the second-generation standard, **characterized in that** the method comprises the steps of:

- extracting the information representative at least of synchronization packets and of signalling packets compliant with the second-generation standard included in the derived stream,
- reading temporal marker values included in parts of the derived stream that are not decoded by the decoder compliant with the first-generation DVB standard,
- updating the temporal marker values included in parts of the derived stream that are decodable by the decoder compliant with the first-generation DVB standard with the values read,

- generating the stream compliant with the second-generation DVB standard on the basis of the derived stream whose marker values have been updated and of the information representative at least of synchronization packets and of the signalling packets compliant with the second-generation standard.

5. Method according to Claim 4, **characterized in that** the parts of the original stream that are not decoded by the decoder compliant with the first-generation DVB standard are packets having a program identifier unreferenced in a program association table accessible to the decoder compliant with the first-generation DVB standard.

6. Method according to Claim 5, **characterized in that** each packet having an unreferenced program identifier furthermore comprises an item of information identifying the position of a packet included in the derived stream.

7. Device for generating a stream, termed derived stream, on the basis of a stream, termed original stream, the said original stream being a transport stream comprising a multiplex of programs compliant with a first-generation DVB standard decodable by a decoder compliant with the DVB standard, **characterized in that** the device comprises:

  - means for obtaining a stream T2-MI compliant with a second-generation DVB standard comprising the multiplex of programs and at least synchronization packets and signalling packets compliant with the second-generation standard,
  - means for generating the derived stream by inserting into the original stream information representative of the synchronization packets and signalling packets, the representative information being inserted into parts of the derived stream that are not decoded by the decoder compliant with the first-generation DVB standard, the inserted representative information being inserted into packets having a program identifier unreferenced in a program association table accessible to the decoder compliant with the first-generation DVB standard and **in that** the packets having an unreferenced program identifier replace padding packets included in the original stream.

8. Device for generating a stream compliant with a second-generation DVB standard on the basis of a so-termed derived stream, comprising a multiplex of programs compliant with a first-generation DVB standard decodable by a decoder compliant with the DVB standard and information representative at least of the synchronization packets and signalling packets compliant with the second-generation standard, **characterized in that** the device comprises:

  - means for extracting the information representative at least of synchronization packets and of signalling packets compliant with the second-generation standard included in the derived stream,
  - means for reading temporal marker values included in parts of the derived stream that are not decoded by the decoder compliant with the first-generation DVB standard,
  - means for updating the temporal marker values included in parts of the derived stream that are decodable by the decoder compliant with the first-generation DVB standard with the values read,
  - means for generating the stream compliant with the second-generation DVB standard on the basis of the derived stream whose marker values have been updated, and of the information representative at least of synchronization packets and of the signalling packets compliant with the second-generation standard.

Fig. 1

Fig. 2

Fig. 3

4.1 — Processeur    Interface — 4.4  De 3.2

4.2 — RAM    Interface — 4.5  Vers 3.3

4.3 — ROM    4.6

3.8

# Fig. 4

5.1 — Processeur    Interface — 5.4  De 3.4

5.2 — RAM    Interface — 5.5  Vers 3.7

5.3 — ROM    5.6

3.9

# Fig. 5

**6.1** — Génération horloge trame T2

**6.2** — Insertion T2-MI DVB-T2 Synchronisation

**6.3** — Insertion T2-MI L1 courant

**6.4** — Insertion PCR

**6.5** — Marquage temporel ISCR

**6.6** — Mise à jour PCR

**6.7** — Adaptation de débit

Fig. 6

**7.1** — Obtention flux T2-MI Génération horloge trame T2

**7.2** — Insertion T2-MI DVB-T2 synchronisation dans paquets bourrage

**7.3** — Insertion T2-MI L1 courant dans paquet bourrage

**7.4** — Marquage temporel ISCR

Fig. 7

**Fig. 8**

- 8.1 — Extraction paramètres
- 8.2 — Reconstruction flux d'origine
- 8.3 — Calcul ISCR
- 8.4 — Reconstruction 1 ou plusieurs TS
- 8.5 — Mise à jour tables
- 8.6 — Construction flux T2-MI
- 8.7 — Insertion T2-MI DVB-T2 synchronisation et L1 courant
- 8.8 — Encapsulation TS

**Fig. 9**

- 9.1 — Extraction T2-MI DVB-T2 synchronisation T2-MI L1 courant
- 9.2 — Reconstruction flux d'origine
- 9.3 — Calcul ISCR
- 9.4 — Reconstruction 1 ou plusieurs TS
- 9.5 — Mise à jour tables
- 9.6 — Construction flux T2-MI
- 9.7 — Insertion T2-MI DVB-T2 synchronisation et L1 courant
- 9.8 — Encapsulation TS

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

• *NetProcessor 9026 Demux,* 13 Mars 2009, 1-2